# EUROPEAN PATENT APPLICATION

(11) **EP 4 700 217 A1**
(43) Date of publication of application: **25.02.2026**
(21) Application number: 24938123.7
(22) Date of filing: 28.06.2024
(51) Int. Cl.: F02B 29/04, F02M 26/07, F02B 63/04

(54) **ENGINE, HYBRID ELECTRIC VEHICLE AND COOLING METHOD**

(30) Priority: 24.05.2024 CN 202410660869
(71) Applicant: Chery Automobile Co., Ltd., Wuhu, Anhui 241006 (CN)
(72) Inventor: JIANG, Dazhi, Wuhu, Anhui 241006 (CN); LIU, Jialong, Wuhu, Anhui 241006 (CN)
(74) Representative: Yang, Shu
(86) International application number: PCT/CN2024/102641
(87) International publication number: WO 2025/241260

(57) **Abstract**

The present disclosure relates to the field of engine cooling technologies, and in particular, to an engine, a hybrid electric vehicle and a cooling method. The engine includes a gas compressor, an intercooler, a throttle valve body, an engine body, a recirculation unit, a turbine and a catalytic converter; the intercooler is provided with a first valve, a cooling channel and an intake channel; and the cooling channel is configured to cool the intake channel. The first valve is communicated with the cooling channel, and the first valve is used for controlling a flow of the cooling channel. The intake channel is communicated with the gas compressor and an intake end of the engine body. The recirculation unit is communicated with the turbine and the gas compressor. The turbine is communicated with an exhaust end of the engine body. According to the present disclosure, the heat efficiency of the engine is improved.

## Description

The present application claims priority to Chinese Patent Application No. 202410660869.2, filed on May 24, 2024 and entitled "ENGINE, HYBRID ELECTRIC VEHICLE AND COOLING METHOD", the disclosure of which is herein incorporated by reference in its entirety.

### TECHNICAL FIELD

The present disclosure relates to the field of engine cooling technologies, and in particular, to an engine, a hybrid electric vehicle and a cooling method.

### BACKGROUND

Hybrid vehicles are vehicles with a plurality of power sources, and the hybrid vehicles can be driven by users.

The hybrid electric vehicle includes an engine and a motor, both of which can drive the vehicle.

In related art, hybrid electric vehicles have relatively high oil consumption due to low thermal efficiency, thereby increasing the cost of use.

### SUMMARY

The embodiments of the present disclosure provide an engine, a hybrid electric vehicle and a cooling method, which can be used to solve the problem of low thermal efficiency of a hybrid electric vehicle. The technical solutions are as follows.

In a first aspect of the present disclosure, an engine is provided. The engine includes a first valve, a gas compressor, an engine body, a recirculation unit, a turbine and an intercooler, wherein the intercooler has a cooling channel and an intake channel, and the cooling channel is configured to cool the intake channel.

The first valve is communicated with the cooling channel, and the first valve is configured to control a flow of the cooling channel.

The intake channel is communicated with the gas compressor and an intake end of the engine body.

The recirculation unit is communicated with the turbine and the gas compressor.

The turbine is communicated with an exhaust end of the engine body.

Optionally, the recirculation unit includes a cooler and a second valve, wherein the turbine, the cooler, the second valve and the gas compressor are sequentially communicated.

Optionally, the engine further includes a catalytic converter, wherein the catalytic converter and the cooler are communicated with an air outlet of the turbine.

Optionally, the engine further includes a regulating valve, wherein the regulating valve and the second valve are communicated with a gas inlet of the gas compressor.

Optionally, the engine includes a piston, wherein the engine body has a cylinder, the piston is capable of moving back and forth within the cylinder, a total volume of the cylinder is 402.3 ml, and a volume of a combustion chamber of the cylinder is 27.2 ml.

Optionally, the engine further includes an oil sprayer, wherein the oil sprayer is communicated with the cylinder, and an oil spray pressure of the oil sprayer is greater than or equal to 350 bar.

A second aspect of the present disclosure provides a hybrid electric vehicle. The hybrid electric vehicle includes a power generator and the engine as described in the above technical solution, and the engine is configured to drive the power generator.

A third aspect of the present disclosure provides a cooling method. The cooling method is applicable to the hybrid electric vehicle as described in the above technical solution. The cooling method includes:
acquiring operating parameters and environment parameters of the engine body;
acquiring exhaust gas recirculation (EGR) rates of the recirculation unit;
acquiring a dew point temperature of the intake channel based on the operating parameters of the engine body, the environment parameters of the engine body and the EGR rates; and
controlling an opening degree of the first valve based on the dew point temperature, such that a temperature in the intake channel is greater than the dew point temperature.

Optionally, the operating parameters of the engine body include at least one of a rotating speed or a torque.

Optionally, the environment parameters of the engine body include at least one of a temperature at the intake end or a humidity at the intake end.

Optionally, acquiring the dew point temperature of the intake channel based on the operating parameters of the engine body, the environment parameters of the engine body and the EGR rates includes:
establishing a three-dimensional coordinate system, wherein an X axis of the three-dimensional coordinate system is a reference operating parameter, a Y axis of the three-dimensional coordinate system is a reference environment parameter, a Z axis of the three-dimensional coordinate system is a reference EGR rate, and a coordinate point of the three-dimensional coordinate system records a reference dew point temperature; and
acquiring a coordinate point based on the operating parameters of the engine body, the environment parameters of the engine body and the EGR rates, and determining the reference dew point temperature recorded by the coordinate point as the dew point temperature of the intake channel.

Optionally, acquiring the dew point temperature of the intake channel based on the operating parameters of the engine body, the environment parameters of the engine body, and the EGR rates specifically includes:
inputting the operating parameters of the engine body, the environment parameters of the engine body and the EGR rates into a model configured to acquire a dew point temperature, and determining a dew point temperature output by the model configured to acquire the dew point temperature as the dew point temperature of the intake channel, wherein the model for acquiring the dew point temperature is acquired by training based on samples corresponding to dew point temperatures as labels, with the operating parameters of the engine body, the environment parameters of the engine body, and the EGR rates as the samples.

The technical solutions according to the embodiments of the present disclosure at least include the following beneficial effects. The turbine increases the intake pressure at the intake end of the engine body, thereby reducing the pumping loss and improving the thermal efficiency. The intercooler cools pressurized gas to reduce the engine knock in the present disclosure. The first valve adapts a cooling effect of the intercooler to the demand of the intake channel by controlling the flow of the cooling channel, such that the combustion stability of the engine in the present disclosure is improved, thereby improving its thermal efficiency.

### BRIEF DESCRIPTION OF DRAWINGS

For clearer descriptions of the technical solutions according to the embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic structural diagram of an engine according to some embodiments of the present disclosure; and
FIG. 2 is a schematic flowchart of a cooling method according to some embodiments of the present disclosure.

The symbols in the figures represent the following components:
1: first valve;
2: gas compressor;
3: engine body;
4: recirculation unit; 41: cooler; 42: second valve;
5: turbine;
6: intercooler; 601: cooling channel; 602: intake channel;
7: catalytic converter;
8: regulating valve;
9: air filter; and
10: throttle valve body.

Through the above drawings, the specific embodiments of the present disclosure have been shown, which are to be described in more detail later. These drawings and text descriptions are not intended to limit the scope of the concept of the present disclosure in any way, but to explain the concept of the present disclosure for those skilled in the art by referring to the specific embodiments.

### DETAILED DESCRIPTION

To make the objectives, technical solutions, and advantages of the present disclosure clearer, the following further describes implementations of the present disclosure in detail with reference to the accompanying drawings.

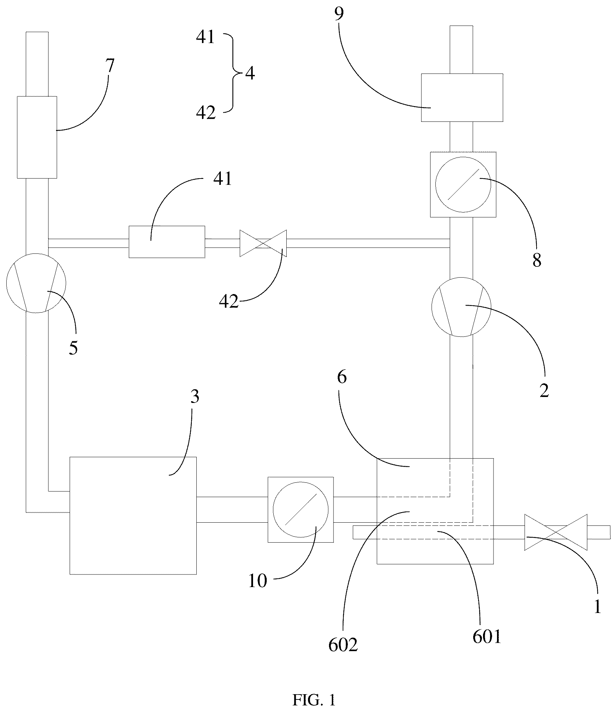

In a first aspect of the present disclosure, an engine is provided. As shown in FIG. 1, the engine includes a first valve 1, a gas compressor 2, an engine body 3, a recirculation unit 4, a turbine 5 and an intercooler 6, wherein the intercooler 6 has a cooling channel 601 and an intake channel 602, and the cooling channel 601 is configured to cool the intake channel 602.

The first valve 1 is communicated with the cooling channel 601, and the first valve 1 is used for controlling a flow of the cooling channel 601.

The intake channel 602 is communicated with the gas compressor 2 and an intake end of the engine body 3.

The recirculation unit 4 is communicated with the turbine 5 and the gas compressor 2.

The turbine 5 is communicated with an exhaust end of the engine body 3.

It should be understood that the turbine 5 increases the intake pressure at the intake end of the engine body 3, thereby reducing the pumping loss and improving the thermal efficiency. The intercooler 6 cools pressurized gas to reduce the engine knock in the present disclosure. The first valve 1 adapts a cooling effect of the intercooler 6 to the demand of the intake channel 602 by controlling the flow of the cooling channel 601, such that the combustion stability of the engine of the present disclosure is improved, thereby improving its thermal efficiency.

In the embodiments of the present disclosure, gas entering the engine body 3 can be ignited and burned, the internal energy generated by combustion can be converted into the mechanical energy. Then, exhaust gas generated upon combustion is discharged, such that the engine completes once operation. The engine generates power by cycling the above operation.

In the embodiments of the present disclosure, the turbine 5 is communicated with the exhaust end of the engine body 3. In this way, the heat and pressure from the exhaust gas generated by the operation of the engine body 3 is reused, and pumping gas is reduced by guiding the pressurized gas back into the engine body 3. In addition, beneficial components in the exhaust gas are also used to participate in the next operation.

In the embodiments of the present disclosure, the intake channel 602 allows air and gas from the recirculation unit to pass through and enter the engine body 3, and the gas entering the engine body 3 provides oxygen and other related conditions for the internal combustion, thereby achieving the normal operation of the engine in the present disclosure.

In the embodiments of the present disclosure, the heat of the exhaust gas is utilized via the turbine 5, which is conducive to increasing the intake temperature. However, because the temperature of the exhaust gas is uncontrollable, the temperature in the engine body 3 is too high, leading knocking or other situations of the engine. This situation reduces the power of the engine of the present disclosure and increase oil consumption, which is not conducive to improving the thermal efficiency. Therefore, the gas in the intake channel 602 is cooled by the cooling channel 601 of the intercooler 6, and the operating performance of the engine is improved. The cooling channel 601 is attached to the outside of the intake channel 602, and allows cooling liquid to flow through to absorb the heat of the gas from the intake channel 602, thereby achieving a cooling effect of the intake channel 602. A closed-loop structure is formed by connecting the ends of the cooling channel 601. The cooling liquid circulates repeatedly through the position of the cooling channel 601 attached to the intake channel 602, which is conducive to continuous cooling of the intake channel 602 by the cooling liquid.

In the embodiments of the present disclosure, the gas flowing through the intake channel 602 loses some heat under the action of the cooling channel 601, and the temperature is reduced accordingly. The temperature reduction causes condensate water to precipitate from the gas in the intake channel 602, and the condensate water enters the engine body 3 and participate in the operation, which reduces the operating stability of the engine in the present disclosure and lead to a reduction in thermal efficiency. The first valve 1 is communicated with the cooling channel 601 and is disposed outside a casing of the intercooler 6, such that the flow of the cooling liquid entering the cooling channel 601 is controlled, thereby changing the cooling effect of the cooling channel 601.

In the case that the engine is operating, the operating conditions are not static, but change over time. Therefore, by controlling the flow of the cooling liquid in the cooling channel 601 via the first valve 1, the precipitation of condensate water from the gas in the intake channel 602 is reduced, which is conducive to improving the operating stability of the engine of the present disclosure. The first valve 1 controls the flow of the cooling channel 601 by controlling the opening degree. Optionally, the first valve 1 is a pneumatic regulating valve or an electric regulating valve.

In the embodiments of the present disclosure, the intake channel 602 is communicated with the gas compressor 2 and the intake end of the engine body 3. The gas compressor 2 increases the pressure of the gas entering the engine body 3, which is conducive to improving the combustion adequacy of the gas and improving its thermal efficiency.

In the embodiments of the present disclosure, the recirculation unit 4 is communicated with the turbine 5 and the gas compressor 2. The turbine 5 collects the exhaust gas generated by the operation of the engine body 3. An appropriate amount of exhaust gas is introduced into the gas compressor 2 via the recirculation unit 4, and the exhaust gas is then mixed with other gases in the gas compressor 2 and participates in the operation. The exhaust gas contains gases such as carbon dioxide, and these gases do not participate in combustion and absorb heat simultaneously. Therefore, in the case that these gases participate in combustion, a maximum temperature in the engine body 3 is reduced, and the generation of nitrogen oxides is reduced.

In the embodiments of the present disclosure, the turbine 5 is also configured to drive the gas compressor 2 to make the gas compressor 2 operate properly, such that the normal operation of the engine in the present disclosure is maintained, thereby improving its structural compactness.

In the embodiments of the present disclosure, the engine of the present disclosure is specifically designed to provide power to a motor, such that the motor generates electrical energy by directly driving a rotor of the motor to rotate.

In the embodiments of the present disclosure, a throttle valve 10 is also disposed between the intake channel 602 and the intake end of the engine body 3.

In some embodiments of the present disclosure, as shown in FIG. 1, the recirculation unit 4 includes a cooler 41 and a second valve 42. The turbine 5, the cooler 41, the second valve 42 and the gas compressor 2 are sequentially communicated.

It should be understood that the exhaust gas discharged from the turbine 5 flows through the cooler 41 and the second valve 42 sequentially, reach the gas compressor 2, and participate in the next operation of the engine body 3. The second valve 42 configured to control the amount of exhaust gas entering the gas compressor 2, such that the exhaust gas is mixed with other gases entering the gas compressor 2 and participates in the next combustion of the engine. The cooler 41 reduces the temperature passing through the second valve 42, and reduces the damage caused by the second valve 42 absorbing too much heat.

In the embodiments of the present disclosure, the cooler 41 is a heat exchanger.

In the embodiments of the present disclosure, the second valve 42 is an electrically controlled valve.

In some embodiments of the present disclosure, as shown in FIG. 1, the engine further includes a catalytic converter 7. The catalytic converter 7 and the cooler 41 are communicated with an air outlet of the turbine 5.

It should be underwood that the exhaust gas discharged from the turbine 5 enters the next operation through the cooler 41 based on the actual needs, or is directly discharged from the engine through the catalytic converter 7, such that the matching degree between the amount of exhaust gas flowing through the recirculation unit 4 and the actual demand is improved, which is conducive to improving the thermal efficiency of the engine of the present disclosure. The catalytic converter 7 catalyzes the exhaust gas discharged from the turbine 5, such that harmful components such as carbon monoxide, hydrocarbons and nitrogen oxides in the exhaust gas are converted into carbon dioxide, nitrogen, hydrogen and water, thereby reducing the pollutions of the exhaust gas to the environment.

In the embodiments of the present disclosure, the catalytic converter 7 is a three-way catalytic converter.

In the embodiments of the present disclosure, the communication between the catalytic converter 7 and the turbine 5 and the communication between the catalytic converter 7 and the cooler 41 are achieved through a tee pipe.

In some embodiments of the present disclosure, as shown in FIG. 1, the engine further includes a regulating valve 8. The regulating valve 8 and the second valve 42 are communicated with a gas inlet of the gas compressor 2.

It should be understood that the regulating valve 8 is in a fully open state under most operating conditions to reduce the impact on intake air (closing the regulating valve 8 means an increase in intake resistance). In the case that the engine is at medium to low speed and medium to low load and meets operating conditions of an EGR system, the pressure at the exhaust end is low and is not enough to drive the EGR gas into the gas compressor 2 and perform effective EGR gas flow calculation. In this case, by closing the regulating valve 8, a negative pressure in front of the gas compressor 2 is increased, the EGR gas on the exhaust side is sucked into an inlet of the gas compressor 2, effective EGR gas flow calculation conditions are met, such that the engine can apply EGR in a wider range of operating conditions to reduce oil consumption. The oil consumption of the engine of the present disclosure is optimized.

In the embodiments of the present disclosure, the engine acquires sufficient pressure difference under as many operating conditions as possible to drive the exhaust gas to move toward the intake air, which is conducive to acquiring consistent EGR rates and improving the thermal efficiency.

In the embodiments of the present disclosure, one end, away from the gas compressor 2, of the regulating valve 8 is communicated with an air filter 9 so as to filter impurities from air entering the gas compressor.

In the embodiments of the present disclosure, the communication between the second valve 42 and the gas compressor 2 and the communication between the regulating valve 8 and the gas compressor 2 are achieved through a tee pipe.

In some embodiments of the present disclosure, the engine includes a piston. The engine body 3 has a cylinder. The piston is capable of moving back and forth within the cylinder. A total volume of the cylinder is 402.3 ml. A volume of a combustion chamber of the cylinder is 27.2 ml.

It should be understood that gas and gasoline is mixed and burned within the cylinder, and the internal energy generated by combustion can drive the piston to move, thereby generating power. The volume of the cylinder changes with the position of the piston in the cylinder. In the case that the piston is at a bottom dead center, the volume of the cylinder is the total volume, and the volume is 402.3 ml. In the case that the piston is at a top dead center, the volume of the cylinder is a volume of the combustion chamber, and the volume is 27.2 ml. Due to the large expansion of the volume of the cylinder during operation, the temperature of the exhaust gas is reduced, and the wasted energy is reduced, such that the thermal efficiency of the present disclosure is improved.

In the embodiments of the present disclosure, the cylinder and the piston is sealed by a piston ring to reduce the leakage of combustion gas.

In some embodiments of the present disclosure, the engine further includes an oil sprayer. The oil sprayer is communicated with the cylinder. An oil spray pressure of the oil sprayer is greater than or equal to 350 bar.

It should be understood that the oil sprayer spray gasoline in the form of a mist into the cylinder. Gasoline is mixed with the gas entering the cylinder and, when ignited and burned, internal energy is released. The oil spray pressure is greater than or equal to 350 bar, which is conducive to the mixing of gasoline with the gas entering the cylinder and the full combustion, such that the power of the engine of the present disclosure is improved, oil consumption and pollutant emissions are reduce.

In the embodiments of the present disclosure, the oil sprayer is a 5-hole oil sprayer or a 6-hole oil sprayer.

In the embodiments of the present disclosure, the orientation of the oil sprayer is the same as the orientation of the air inlet of the cylinder, which is conducive to an oil beam sprayed by the oil sprayer to follow a movement direction of intake air tumble. In this wat, the intake air tumble in the cylinder is enhanced, the interference of the oil beam on the intake air tumble is reduced, and the oil and gas are mixed more uniformly. The turbulent movement of the gas upon mixing maintains high intensity, which can also speed up the propagation of combustion flames upon ignition and improve the thermal efficiency.

In the embodiments of the present disclosure, the engine further includes a cam and an intake valve. The cam is configured to drive the intake valve to circulate, so as to seal the air inlet of the cylinder or communicate the air inlet of the cylinder and the intake end of the engine body 3. The lift of the intake valve is 1 mm, and the duration of the intake lift is ≤ 150°, such that the maximum lift of the intake valve is adjusted to ≥9 mm on the basis of the deep Miller cycle to increase a swirl ratio by ≥ 3.7. In the embodiments of the present disclosure, the maximum thermal efficiency of the engine is ≥ 42%, and a specific oil consumption of 220 g/kW·h can be achieved in a rotating speed range of 1250 rpm to 5250 rpm.

A second aspect of the present disclosure provides a hybrid electric vehicle. The hybrid electric vehicle includes a power generator and the engine as described in the above embodiments. The engine is configured to drive the power generator.

It is understood that due to the engine of the above embodiments, the hybrid electric vehicle of the present disclosure has the same technical effects as the above embodiments, which are not repeated herein.

In the embodiments of the present disclosure, the engine is only configured to drive the motor to generate electricity.

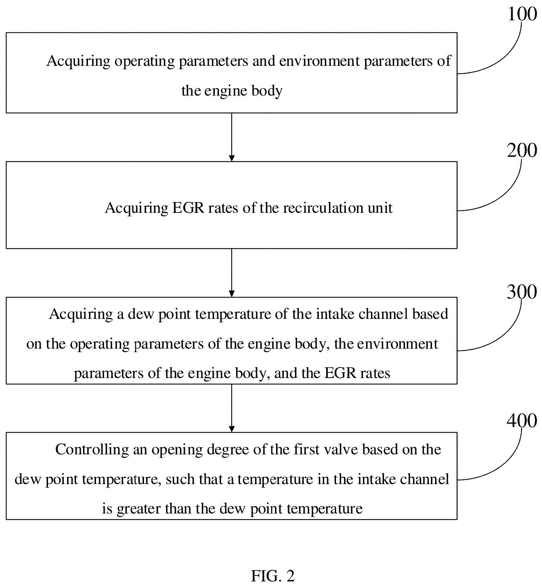

A third aspect of the present disclosure provides a cooling method. As shown in FIG. 2, the cooling method is applied to the hybrid electric vehicle as described in the above embodiments. The cooling method includes the follows.

In 100, operating parameters and environment parameters of the engine body 3 are acquired.

In 200, EGR rates of the recirculation unit 4 is acquired.

In 300, a dew point temperature of the intake channel 602 is acquired based on the operating parameters of the engine body 3, the environment parameters of the engine body 3, and the EGR rates.

In 400, an opening degree of the first valve 1 is acquired based the dew point temperature, such that a temperature in the intake channel 602 is greater than the dew point temperature.

Due to the use of the hybrid electric vehicle as described in the above embodiments, the cooling method of the present disclosure has the same technical effects as the above embodiments, which are not repeated herein.

It is understood that in the case that the temperature in the intake channel 602 is less than the dew point temperature, water vapor in the air condenses into water droplets, forming condensate water. In the case that condensate water is present in the intake channel 602, it is not conducive to the normal operation of the engine body 3. Therefore, the precipitation of condensate water in the intake channel 602 is evaluated based on the dew point temperature. The dew point temperature of the intake channel 602 is calculated based on relevant parameters of the engine body 3 and the recirculation unit 4, which improves the reliability of acquiring the dew point temperature.

By controlling the opening degree of the first valve 1, the flow of the cooling liquid in the cooling channel 601 is changed. As the flow of the cooling liquid changes, the heat in the intake channel 602 that is taken away also changes, thus the cooling effect of the intake channel 602 is adjusted. Correspondingly, the temperature in the intake channel 602 also changes accordingly. Therefore, by controlling the opening degree of the first valve 1, the temperature reduction in the intake channel 602 is changed.

Because the temperature in the intake channel 602 is generally greater than the dew point temperature, and is affected by the flow of the cooling liquid in the cooling channel 601, controlling the opening degree of the first valve 1 can significantly influence the temperature in the intake channel 602, which is conducive to avoiding condensate water generated by the intake channel 602 and improving the thermal efficiency.

In some embodiments of the present disclosure, acquiring the dew point temperature of the intake channel 602 based the operating parameters of the engine body 3, the environment parameters of the engine body 3, and the EGR rates specifically includes:
establishing a three-dimensional coordinate system, wherein an X axis of the three-dimensional coordinate system is a reference operating parameter, a Y axis of the three-dimensional coordinate system is a reference environment parameter, a Z axis of the three-dimensional coordinate system is a reference EGR rate, and a coordinate point of the three-dimensional coordinate system records a reference dew point temperature;
acquiring a coordinate point based on the operating parameters of the engine body 3, the environment parameters of the engine body 3, and the EGR rates; and
determining the reference dew point temperature recorded by the coordinate point as the dew point temperature of the intake channel 602.

In the embodiments of the present disclosure, the operating parameters of the engine body 3, the environment parameters of the engine body 3, and the EGR rates change continuously during the operating process of the hybrid electric vehicle of the present disclosure. Therefore, the reference operating parameter, the reference environment parameter and the reference EGR rate are respectively used as the coordinate systems of the X, Y and Z axes. The corresponding dew point temperature is distributed for each coordinate point. By acquiring the above three parameters, the corresponding coordinate point in the coordinate system is acquired, and the dew point temperatures corresponding to the operating parameter of the engine body 3, the environment parameters of the engine body 3, and the EGR rate are also acquired.

In the embodiments of the present disclosure, the plurality of reference operating parameters are distributed on the X axis, and a difference exists between each two adjacent reference operating parameters. The plurality of reference environment parameters are distributed on the Y axis, and a difference exists between each two adjacent reference environment parameters. The plurality of reference EGR rates are distributed on the Z axis, and a difference exists between each two adjacent reference EGR rates.

The coordinate point is acquired based on the operating parameters of the engine body 3, the environment parameters of the engine body 3, and the EGR rates. In the case that the operating parameter of the engine body 3 is inconsistent with the reference operating parameter, a reference operating parameter closest to the operating parameter of the engine body 3 is selected. In the case that the environment parameter of the engine body 3 is inconsistent with the reference environment parameter, a reference environment parameter closest to the environment parameter of the engine body 3 is selected. In the case that the EGR rate of the engine body 3 is inconsistent with the reference EGR rate, a reference EGR rate closest to the EGR rate of the engine body 3 is selected.

In some embodiments of the present disclosure, acquiring the dew point temperature of the intake channel 602 based on the operating parameters of the engine body 3, the environment parameters of the engine body 3, and the EGR rates specifically includes:
inputting the operating parameters of the engine body 3, the environment parameters of the engine body 3, and the EGR rates into a model configured to acquire a dew point temperature, and determining a dew point temperature output by the model configured to acquire the dew point temperature as the dew point temperature of the intake channel 602, wherein the model configured to acquire the dew point temperature is acquired by training based on samples corresponding to dew point temperatures as labels, with the operating parameters of the engine body 3, the environment parameters of the engine body 3, and the EGR rates as the samples.

In the embodiments of the present disclosure, a plurality of datasets are acquired based on actual situations. Each dataset includes a sample and a label. One sample includes operating parameters of one engine body 3, environment parameters corresponding to the operating parameters, and the EGR rates corresponding to the operating parameters, and the label includes dew point temperatures. Each sample in each dataset is determined as an input, and an output is calculated by a neural network. The output is compared and calculated with the label to acquire a loss function. The loss function is used to update a weight matrix of the neural network, and the model configured to acquire the dew point temperature is acquired by multiple training. The dew point temperature is acquired by the resulting model based on the operating parameters of the engine body 3, the environment parameters of the engine body 3, and the EGR rates under each operating condition. The opening degree of the first valve 1 is then acquired based on the acquired dew point temperature.

In the embodiments of the present disclosure, the opening degree of the first valve 1 corresponding to each dew point temperature is acquired by test.

In some embodiments of the present disclosure, the operating parameters of the engine body 3 include a rotating speed.

It is understood that the rotating speed of the engine body 3 refers to a rotating speed of a crankshaft on the engine body 3. The parameter characterizes the magnitude of the rotating speed of the crankshaft. The magnitude of this parameter affects the pressure in the intake channel 602, and then affects the dew point temperature.

In some embodiments of the present disclosure, the operating parameters of the engine body 3 include a torque.

It is understood that the rotating speed of the engine body 3 refers to a rotating speed of the crankshaft on the engine body 3. The parameter characterizes the magnitude of the rotating speed of the crankshaft. The magnitude of this parameter affects the pressure in the intake channel 602, and then affects the dew point temperature.

In some embodiments of the present disclosure, the operating parameters of the engine body 3 include a rotating speed and a torque.

It is understood that the rotating speed of the engine body 3 refers to a rotating speed of the crankshaft on the engine body 3. This parameter characterizes the magnitude of the rotating speed of the crankshaft. The magnitude of this parameter affects the pressure in the intake channel 602, and then affects the dew point temperature. The rotating speed of the engine body 3 refers to the rotating speed of the crankshaft on the engine body 3. The parameter characterizes the magnitude of the rotating speed of the crankshaft. The magnitude of the parameter affects the pressure in the intake channel 602, and then affects the dew point temperature. Such arrangement is conducive to improving the reliability of acquiring the dew point temperature.

In some embodiments of the present disclosure, the environment parameters of the engine body 3 include a temperature at the intake end.

It is understood that in the case that the temperature at the intake end increases, the moisture content in the intake channel 602 generally increases accordingly, resulting in an increase in the dew point temperature. In the case that the temperature at the intake end decreases, the moisture content in the intake channel 602 generally decreases accordingly, resulting in a decrease in the dew point temperature.

In some embodiments of the present disclosure, the environment parameters of the engine body 3 include a humidity at the intake end.

It is understood that in the case that the humidity at the intake end increases, the moisture content in the air generally increases accordingly, resulting in an increase in the dew point temperature. In the case that the humidity at the intake end decreases, the moisture content in the air generally decreases accordingly, resulting in a decrease in the dew point temperature.

In some embodiments of the present disclosure, the environment parameters of the engine body 3 include a temperature at the intake end and a humidity at the intake end.

It is understood that in the case that the amount of the EGR gas at the intake end increases, the moisture content in the intake channel 602 generally increases accordingly, resulting in an increase in the dew point temperature. In the case that the humidity of ambient air at the intake end increases, the moisture content in the air generally increases accordingly, resulting in an increase in the dew point temperature. The pressure at the intake end and the humidity at the intake end are used as the conditions for acquiring the dew point temperature, which is conducive to improving its reliability.

In the present disclosure, the terms "first" and "second" are used for descriptive purposes only and are not to be construed as indicating or implying relative importance. The term "plurality" refers to two or more, unless specifically defined otherwise.

Other embodiments of the present disclosure will be apparent to a person skilled in the art from consideration of the specification and practice the present disclosure herein. The present disclosure is intended to cover any variations, uses, or adaptations of the present disclosure, following the general principles thereof and including common knowledge or commonly used technical measures which are not disclosed herein. The specification and embodiments are considered to be illustrative only.

It will be appreciated that the present disclosure is not limited to the exact construction that has been described above and illustrated in the accompanying drawings, and that various modifications and changes can be made without departing from the scope thereof. It is intended that the scope of the present disclosure is only limited by the appended claims.

It may be understood by a person of ordinary skill in the art that all or part of steps in the above embodiments may be completed by hardware, or a program instructing relevant hardware. The program may be stored in a computer-readable storage medium which includes a read-only memory, a magnetic disk, an optical disc or the like.

The foregoing descriptions are merely preferred embodiments of the present disclosure, and are not intended to limit the present disclosure. Within the spirit and principles of the present disclosure, any modifications, equivalent substitutions, improvements, etc., are within the protection scope of the present disclosure.

## Claims

1. An engine, comprising a first valve (1), a gas compressor (2), an engine body (3), a recirculation unit (4), a turbine (5), and an intercooler (6), wherein the intercooler (6) has a cooling channel (601) and an intake channel (602), and the cooling channel (601) is configured to cool the intake channel (602);
wherein the first valve (1) is communicated with the cooling channel (601), and the first valve (1) is configured to control a flow of the cooling channel (601);
the intake channel (602) is communicated with the gas compressor (2) and an intake end of the engine body (3);
the recirculation unit (4) is communicated with the turbine (5) and the gas compressor (2); and
the turbine (5) is communicated with an exhaust end of the engine body (3).

2. The engine according to claim 1, wherein the recirculation unit (4) comprises a cooler (41) and a second valve (42), wherein the turbine (5), the cooler (41), the second valve (42), and the gas compressor (2) are sequentially communicated.

3. The engine according to claim 2, further comprising a catalytic converter (7), wherein the catalytic converter (7) and the cooler (41) are communicated with an air outlet of the turbine (5).

4. The engine according to claim 3, further comprising a regulating valve (8), wherein the regulating valve (8) and the second valve (42) are communicated with a gas inlet of the gas compressor (2).

5. The engine according to claim 1, comprising a piston, wherein the engine body has a cylinder, the piston is capable of moving back and forth within the cylinder, a total volume of the cylinder is 402.3 ml, and a volume of a combustion chamber of the cylinder is 27.2 ml.

6. The engine according to claim 5, further comprising an oil sprayer, wherein the oil sprayer is communicated with the cylinder, and an oil spray pressure of the oil sprayer is greater than or equal to 350 bar.

7. A hybrid electric vehicle, comprising a power generator and the engine as defined in any one of claims 1 to 6, wherein the engine is configured to drive the power generator.

8. A cooling method, applicable to the hybrid electric vehicle as defined in claim 7, and the cooling method comprising:
acquiring operating parameters and environment parameters of the engine body (3);
acquiring EGR rates of the recirculation unit (4);
acquiring a dew point temperature of the intake channel (602) based on the operating parameters of the engine body (3), the environment parameters of the engine body (3), and the EGR rates; and
controlling an opening degree of the first valve (1) based on the dew point temperature, such that a temperature in the intake channel (602) is greater than the dew point temperature.

9. The cooling method according to claim 8, wherein the operating parameters of the engine body (3) comprise at least one of a rotating speed or a torque.

10. The cooling method according to claim 8, wherein the environment parameters of the engine body (3) comprise at least one of a temperature at the intake end or a humidity at the intake end.

11. The cooling method according to claim 8, wherein acquiring the dew point temperature of the intake channel (602) based on the operating parameters of the engine body (3), the environment parameters of the engine body (3), and the EGR rates comprises:
establishing a three-dimensional coordinate system, wherein an X axis of the three-dimensional coordinate system is a reference operating parameter, a Y axis of the three-dimensional coordinate system is a reference environment parameter, a Z axis of the three-dimensional coordinate system is a reference EGR rate, and a coordinate point of the three-dimensional coordinate system records a reference dew point temperature;
acquiring a coordinate point based on the operating parameters of the engine body (3), the environment parameters of the engine body (3), and the EGR rates; and
determining the reference dew point temperature recorded by the coordinate point as a dew point temperature of the intake channel (602).

12. The cooling method according to claim 8, wherein acquiring the dew point temperature of the intake channel (602) based on the operating parameters of the engine body (3), the environment parameters of the engine body (3), and the EGR rates comprises:
inputting the operating parameters of the engine body (3), the environment parameters of the engine body (3), and the EGR rates into a model configured to acquire a dew point temperature, and determining a dew point temperature output by the model configured to acquire the dew point temperature as the dew point temperature of the intake channel (602), wherein the model configured to acquire the dew point temperature is acquired by training based on samples corresponding to dew point temperatures as labels, with the operating parameters of the engine body (3), the environment parameters of the engine body (3), and the EGR rates as the samples.
